# EUROPÄISCHE PATENTANMELDUNG

(11) **EP 0 665 429 A2**
(43) Veröffentlichungstag der Anmeldung: **02.08.1995**
(21) Anmeldenummer: 95100374.8
(22) Anmeldetag: 12.01.1995
(51) Int. Cl.: G01N 27/16

(54) **Hochtemperatur-Gassensor und Verfahren zu seiner Herstellung**

(30) Priorität: 25.01.1994 DE 4402117
(71) Anmelder: SIEMENS MATSUSHITA COMPONENTS GmbH & CO KG, D-81617 München (DE)
(72) Erfinder: Feltz, Adalbert, Dr. rer. nat., Prof., A-8530 Deutschlandsberg (AT); Lindner, Friederike, Dipl.-Chem., A-70839 Gerlingen (DE)
(74) Vertreter: Fuchs, Franz-Josef, Dr.-Ing.

(57) **Zusammenfassung**

Hochtemperatur-Gassensor in Form einer oxidkeramischen Halbleiterschicht mit definierter kristalliner Struktur und einer Thermistorkennlinie hoher Empfindlichkeit

## Beschreibung

Die vorliegende Erfindung betrifft einen Hochtemperatur-Gassensor sowie ein Verfahren zu seiner Herstellung nach dem Oberbegriff des Patentanspruchs 1 bzw. 4.

Bekannte technische Lösungen gehen beispielsweise von Widerstandsthermometern auf der Basis von Edelmetallen, z. B. Pd-Au-Legierungen in "Trans. Faraday Soc." 62 (1966) 2566] oder Wendeln aus dünnem Pt-Draht in "Solid State Gas Sensors", IOP-Publ. Ltd, England 1987 aus, die zur Steuerung von Verbrennungsprozessen vorgeschlagen wurden GB-PS 892 530. Dabei wird die vergleichsweise geringe Temperaturabhängigkeit des elektrischen Widerstandes derartiger Metalle in der Weise genutzt, daß die infolge katalytischer Oxidation reduzierender Gase auftretende Reaktionswärme, die an der Oberfläche eines beheizten Widerstandsdrahtes freigesetzt wird, als Sensorsignal dient.

Es sind Anwendungen bis zu 800°C vorgeschlagen worden. Aufgrund der relativ geringen Empfindlichkeit von im Mittel nur einigen Zehntel Prozent Widerstandsänderung pro Grad ist die Detektion durch Störeinflüsse, z. B. die Gasdurchflußgeschwindigkeit, stark beeinträchtigt. Der Detektionsbereich ist dadurch nach unten auf etwa 0,1% eines brennbaren Gases beschränkt. "Measurement and Control" 22 (1989), 176. Zur Erhöhung der Empfindlichkeit und Erniedrigung der Ansprechtemperatur wurden Beschichtungen mit Katalysatoren, z. B. Aluminiumoxid, vorgeschlagen DE-OS 30 40 243 . Der Schritt zu planaren, integrationsfähigen Anordnungen ist für derartige Gassensoren durch die DE-PS 30 28 249 belegt worden.

Weitere technische Lösungen sehen anstelle des Widerstandsdrahtes ein Halbleiterbauelement mit steilerer Kennlinie und dementsprechend größerer Empfindlichkeit vor. Der Temperaturbereich wird in diesem Fall auf 200 bis 500°C eingegrenzt angegeben DE-OS 38 39 414 A1, und es ist unter der Katalysatorschicht auf der Außenseite zusätzlich eine Passivierungsschicht als Zwischenschicht erforderlich, um das Halbleiterbauelement zu schützen DE- 37 43 399 . Metalloxidhalbleiter, z. B. SnO₂, ZnO, WO₃ bzw. In₂O₃ mit einer amorphen katalytisch wirkenden Deckschicht werden in der DE-PS 29 33 971 beschrieben.

Eine andere Variante vorgeschlagener technischer Lösungen für die Detektion kalorimetrischer Signale mit hinreichender Empfindlichkeit betrifft Sensoren, die den pyroelektrischen Effekt z. B. in "Ferroelectrics" 54 (1984) 211 oder US-PS 3,861,879 bzw. die steile Temperatur-Widerstandskennlinie einer Kaltleiterkeramik nutzen z. B. "Sensors & Actuators", B1 (1990), 54. Im ersteren Fall ist die Anwendung durch eine obere Temperaturgrenze, den ferroelektrischen Phasenumwandlungspunkt, im letzteren auf den engen Temperaturbereich der ferroelektrischen Phasenumwandlung beschrankt. Schwierigkeiten bereitet bei derartigen Materialien auch vor allem die Langzeitstabilität unter den Bedingungen der Anwendung.

Heißleiter-Sinterkeramiken, wie sie in der DE-OS 42 13 629 für alterungsstabile Thermistoren, z. B. in den Systemen FeₓNi_{y}Mn_{3-x-y}O₄ und Zn_{z}Fe_{x-z}NiMn₂₋ₓO₄ (B-Konstante 3400 bis 4000 K) oder für Hochtemperaturanwendungen bis 750°C in der DE-OS 42 13 629, z. B. MgNiMnO₄ (B-Konstante 4550 K) bzw. bis 1200°C in der älteren deutschen Patentanmeldung P 43 27 285.1, z. B. Sr₇Mn₄O₁₅ (B-Konstante 10500 K) beschrieben wurden, lassen aufgrund der hohen Nichtlinearität der Widerstands-Temperatur-Kennlinie eine Empfindlichkeit der Temperaturmessung im Bereich einiger Prozent Widerstandsänderung pro Grad und zugleich hohe Stabilität und Reproduzierbarkeit bei der Messung eines kalorimetrischen Signals erwarten.

Der Erfindung liegt die Aufgabe zugrunde, Hochtemperatur-Gassensoren zur Detektion kalorimetrischer Signale mit hoher Stabilität und Empfindlichkeit für einen Temperaturbereich bis 750 °C und darüber hinaus bis 1000°C sowie ein dafür geeignetes Herstellungsverfahren anzugeben.

Diese Aufgabe wird bei einem Hochtemperatur-Gassensor sowie einem Verfahren zu seiner Herstellung erfindungsgemäß durch die Merkmale des kennzeichnenden Teils des Patentanspruchs 1 bzw. 4 gelöst.

Weiterbildungen der Erfindung sind Gegenstand entsprechender Unteransprüche.

Die Erfindung wird im folgenden anhand von Ausführungsbeispielen in Verbindung mit den Figuren der Zeichnung näher erläutert. Es zeigen:
- Figur 1: das Schema einer Anordnung zur elektrophoretischen Abscheidung der oxidkeramischen Pulver zwischen zwei Platin-Elektroden auf einer mit SnOₓ beschichteten Al₂O₃-Substratunterlage;
- Figur 2: das Al₂O₃-Substratplättchen mit den durch Sputtern aufgetragenen Platinelektroden, der aufgedampften SnOₓ-Schicht und der darauf elektrophoretisch abgeschiedenen aktiven Schicht des oxidkeramischen Pulvers;
- Figur 3: in einer REM-Aufnahme die mit der hohen Porosität verbundene große Oberfläche der durch Sintern fixierten oxidkeramischen Halbleiterschicht;
- Figur 4: die nichtlineare Abhängigkeit des elektrischen Widerstandes dünner oxidkeramischer Halbleiterschichten, deren B-Konstante mit der kompakter Proben annähernd übereinstimmt;
- Figur 5: als Beispiel für die Gassensor-Funktion die Widerstandsänderung einer Zn_{1/3}NiMn_{5/3}O₄-Schicht in Abhängigkeit von der Zeit und vom Zudosieren bzw. Abschalten von Methan (5%) zu einem O₂/Argon-Strom bei (a) 580°C, (b) 610°C, (c) 640°C und (d) 670°C;
- Figur 6: als Beispiel für die Gassensor-Funktion die Widerstandsänderung einer FeNiMnO₄-Schicht in Abhängigkeit von der Zeit und vom Zudosieren bzw. Abschalten von Methan (5%) zu einem O₂/Argon-Strom bei (a) 580°C, (b) 610°C, (c) 640°C und (d) 670°C;
- Figur 7: als Beispiel für die Gassensor-Funktion die Widerstandsänderung einer MgNiMnO₄-Schicht in Abhängigkeit von der Zeit und vom Zudosieren bzw. Abschalten von Methan (5%) zu einem O₂/Argon-Strom bei (a) 610°C und (b) 705°C;
- Figur 8: als Beispiel die Widerstandsänderung bei konstanter Temperatur in Abhängigkeit vom CH₄-Gehalt in Luft für eine MgNiMnO₄-Schicht gemäß Figur 7.

Der Kern der Erfindung besteht darin, die hohe Temperatur-Meßempfindlichkeit einer Thermistor-Keramik mit steiler Kennlinie (großer B-Konstanten) und hoher thermischer und chemischer Stabilität in einer dünnen porösen Schicht auf einem indifferenten Träger auszubilden, dadurch einen hinreichenden Kontakt mit dem Gasgemisch zu ermöglichen, in dem die Wärme freisetzenden Reaktion abläuft, so daß eine empfindliche Detektion der brennbaren Bestandteile, z. B. H₂, CO, CH₄ oder anderer organischer gasförmiger Verbindungen in einem möglichst ausgedehnten Temperaturbereich zustande kommt.

Gemäß besonderer Ausführungsformen der Erfindung handelt es sich um eine Dünnschicht-Sinterkeramik auf der Basis von Spinellen der Zusammensetzung Zn_{z}Fe_{x-z}NiMn₂₋ₓO₄, FeₓNi_{y}Mn_{3-x-y}O₄ oder MgNiMnO₄ auf Al₂O₃-Keramik als Substratunterlage für Anwendungen bis 750°C bzw. um die Verbindung Sr₇Mn₄O₁₅ mit ihrer eigenen charkteristischen Struktur und deren durch Substitution abgewandelten Varianten Sr₇₋ₓMₓMn₄O₁₅ bzw. Sr₇Mn_{4-y}M_{y}O₁₅ auf MgO-Keramik als Substratunterlage für Anwendungen bis 1000°C, worin M einen Dotierungsstoff bedeutet, der in der erstgenannten Verbindungsreihe Yttrium (Y), Lanthan (La) oder ein Element der Seltenen Erden und in der zweitgenannten Niob (Nb), Tantal (Ta) oder aber auch Titan (Ti) oder Scandium (Sc) bedeuten kann.

Die Paramter x und y sind im Grundsatz größer als Null. Sie können ggf. auch gleich Null sein, wobei im letzteren Fall der Dotierungsstoff entfällt.

Beim erfindungsgemäßen Verfahren zur Herstellung einer Dünnschicht-Sinterkeramik ist vorgesehen, aus einer wäßrigen Acetatlösung, die die für den Aufbau der Spinelle benötigten Kationen im entsprechenden stöchiometrischen Verhältnis enthält, Oxalat-Mischkristalle FeₓNi_{y}Mn_{3-x-y}(C₂O₄)₃ 6H₂O bzw. MgNiMn(C₂O₄)₃ 6H₂O auszufällen und diese in einem linearen Aufheizprozeß auf 400°C durch thermische Zersetzung in ein Pulver zu überführen, in dem die Spinellstruktur bereits weitgehend vorgebildet ist und das sich aufgrund der großen spezifischen Oberfläche für die Bereitung einer stabilden Suspension zur elektrophoretischen Abscheidung eignet.

Die Herstellung des Sr₇Mn₄O₁₅-Pulvers und der davon durch Substituion abgeleiteten Verbindungen sieht dagegen die Mischung der Komponenten SrCO₃ und Manganoxid, z. B. Mn₃O₄, sowie ggf. der Dotierungsstoffe im entsprechenden stöchiometrischen Verhältnis zu einem wäßrigen Schlicker vor, dessen Feststoffanteil nach dem Abfiltrieren und Trocken durch 12-stündiges Erhitzen auf 1200°C zunächst kalziniert und anschließend durch Aufmahlen, Preßverdichtung und erneutes Erhitzen bis auf 1550°C zur homogenen Verbindung umgesetzt wird. Letztere muß abschließend einem Aufmahlprozeß unterzogen werden, um für die Substanz einen zur elektrophoretischen Abscheidung geeigneten Dispersionsgrad zu erreichen.

Es ist erfindungsgemäß insbesondere vorgesehen, Al₂O₃- bzw. MgO-Keramiksubstratplättchen auf der Oberfläche durch Sputtern von Platin oder nach einem anderen geeigneten Abscheidungsverfahren mittels Masktentechnik mit zwie durch einen Spalt getrennten Kontakten zu versehen, diese anschließend durch Aufdampfen von SnO durch eine leitende transparente etwa 0,3 um dicke SnO₂₋ₓ-Schicht zu verbinden und auf letzterer die erhaltenen Pulver aus einer Suspension, die unter Verwendung eines nichtwäßrigen, hinreichend polaren Lösungsmittels, z. B. Butanol und von 0,25% Trichloressigsäure als Dispersionsmittel (10% bezogen auf die eingesetzte Pulvermenge) bereitet wird, durch Anlegen einer Spannung von etwa 10 bis 100 Volt in einer Schicht elektrophoretisch abzuscheiden und dabei die Schichtdicke im Bereich von 1 um bis etwa 100 um durch die angelegte Spannung und/oder die Zeit zu kontrollieren.

Durch Sintern bei 1000°C wird die anfangs lockere Pulverschicht in eine fest haftende poröse Oxidkeramikschicht umgewandelt, deren elektrische Paramter durch Tempern auf 800°C und nicht zu schnelles Abkühlen auf stabile Werte eingestellt werden können. Die anfangs leitende SnO₂₋ₓ-Schicht verliert dabei ihre halbleitenden Eigenschaften, so daß ein diesbezüglicher störender Einfluß entfällt und der elektrische Widerstand der oxidkeramischen Halbleiterschicht zwischen den Platinelektroden in einer annähernd definierten geometrischen Anordnung der Messung zugänglich ist.

Die Erfindung wird an folgenden Ausführungsbeispielen weiter erläutert:

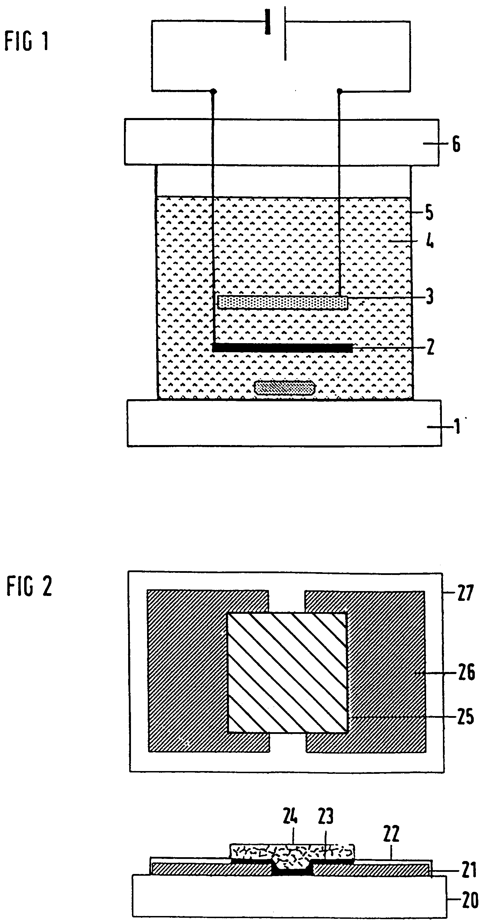

Figur 1 zeigt die Anordnung einer Elektrophorese-Vorrichtung, in der die durch Oberflächenadsorption negativ aufgeladenen Pulverteilchen der Suspension entgegen der Schwerkraft auf der Fläche der SnO₂₋ₓ-Schicht anodisch abgeschieden werden. Dabei deckt man die von SnO₂₋ₓ nicht beschichteten Bereich der Platin-Kontakte zweckmäßig mit einem anschließend leicht lösbaren Lack ab. Je nach angelegter Spannung und angewandter Zeit lassen sich auf dem Substratplättchen bestimmte Schichtdicken der oxidkeramischen Halbleiterpulver erzeugen.

Figur 2 zeigt in Ergänzung zu Figur 1 im Grund- und im Aufriß ein Al₂O₃-Substratplättchen mit den durch Sputtern aufgebrachten Platinkontaktion einer Schichtdicke von 0,1 bis 0,15 um in stets gleichem Abstand von 5 mm und der durch Aufdampfen und thermisches Formieren erzeugten etwa 0,3 um dicken SnO₂₋ₓ-Schicht (über dem Spalt und die Platinkontakte partiell abdeckend), auf der das oxidkeramische Pulver nach einer Lackabdeckung der freien Platinoberfläche definiert elektrophoretisch in Schichtdicken zwischen 1 und 100 um abgeschieden werden kann.

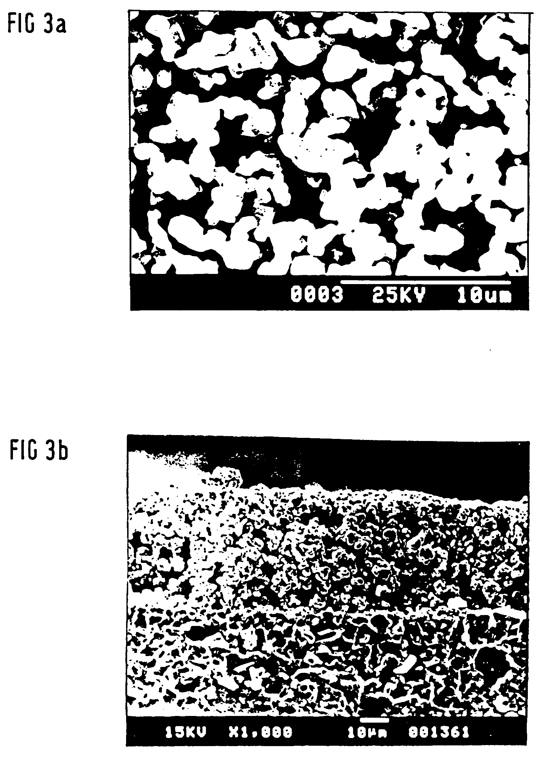

Figur 3 zeigt in REM-Aufnahmen (a) in der Aufsicht, (b) in einem Bruch senkrecht zur Schicht das lockere Gefüge der oxidkeramischen Halbleiterschicht nach der Sinterung und Temperung. Günstige Voraussetzungen für den lokalen Wärmeübergang zwischen einer exotherm verlaufenden Gasreaktion und der Thermistorkeramik mit steiler Kennlinie sind durch die große Oberfläche gegeben, die zugleich die Möglichkeit einer katalytischen Beschleunigung der Gasreaktion einschließt.

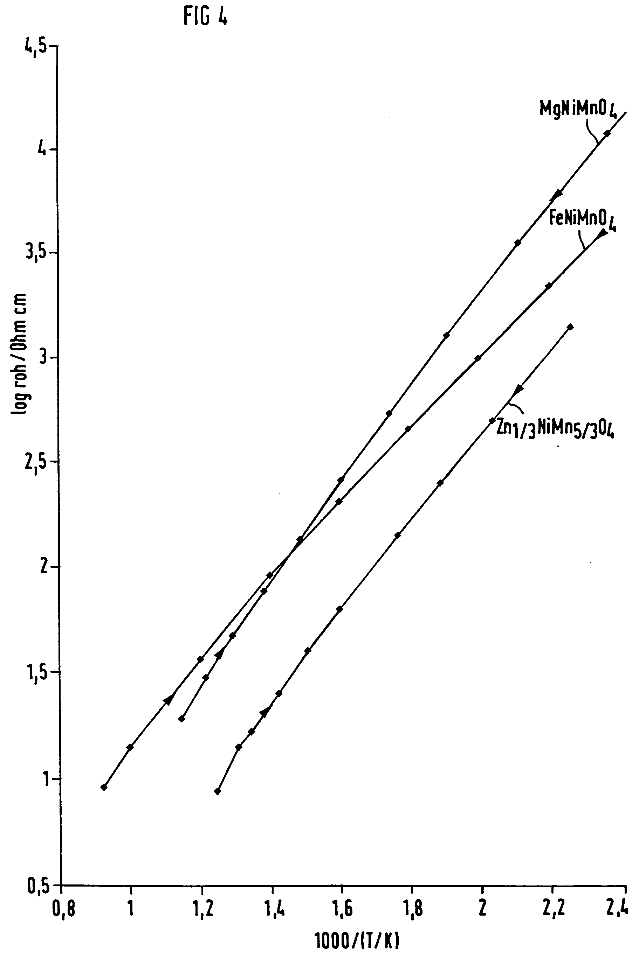

Figur 4 zeigt in logarithmischer Darstellung die Abhängigkeit des spezifischen Widerstandes von der reziproken absoluten Temperatur für Schichten der Zusammmensetzung Zn_{1/3}NiMn_{5/3}O₄ (Schichtdicke 25 um), FeNiMnO₄ (Schichtdicke 23 um) und MgNiMnO₄ (Schichtdicke 30 um). Die Werte des spezifischen Widerstandes sind für 25°C zusammne mit der gemäß Gleichung (1) ergebenden B-Konstanten in Temperaturintervall ϑ1/ϑ2°C (in der Regel 150/500°C) in Tabelle 1 zusammengestellt. Zum Vergleich sind in der Tabelle entsprechende Werte für kompakte Keramikproben, die in Tablettenform vermessen werden, mit aufgeführt.

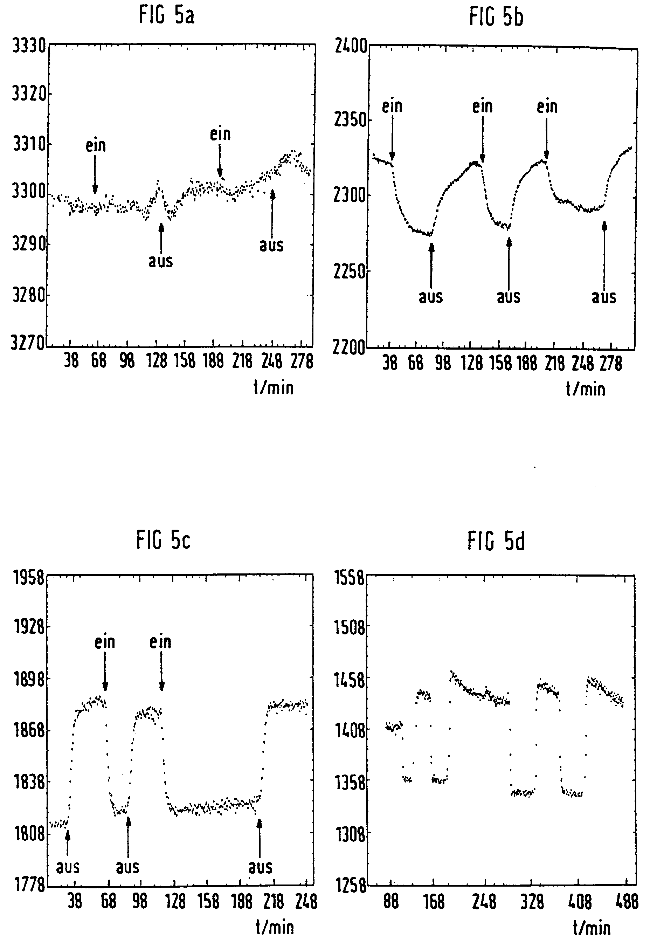

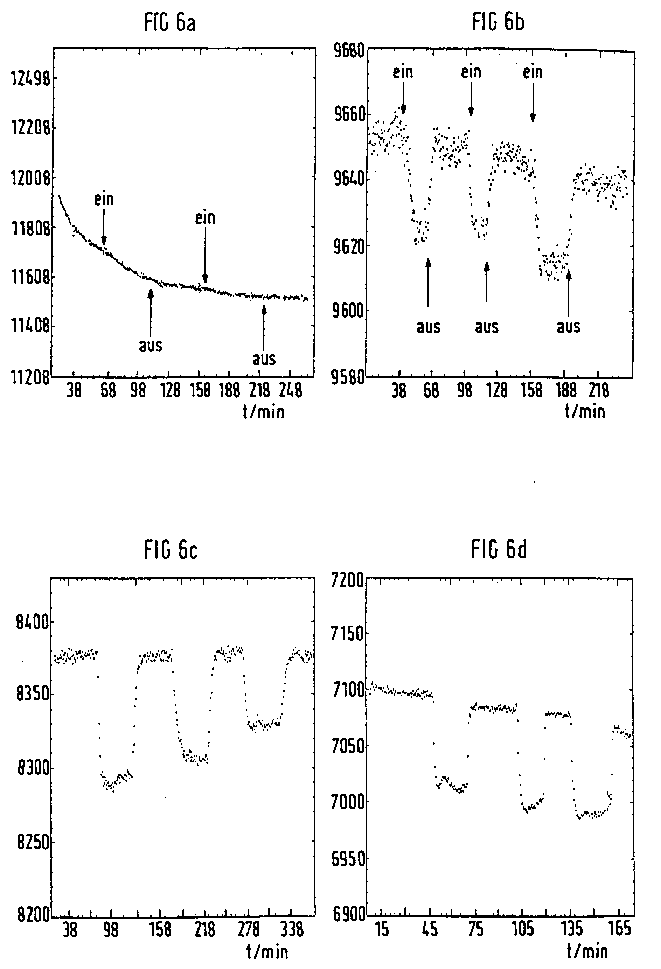

Figur 5 und 6 zeigen die Detektion von Methan in einem Argonstrom, der neben 5% Methan zugleich 12% Sauerstoff enthält, durch die Wärmetönung der Oxidationsreaktion an, die im oberflächennahen Bereich der oxidkeramischen Halbleiterschicht bei 610°C (b) einsetzt und mit aufsteigender Temperatur bei 640°C (c) und 670°C (d) zu einer immer stärker hervortretenden Widerstandsabnahme Anlaß gibt, die bei Abschalten der Methanzufuhr vollständig reversibel ist. Der Widerstandsänderung entspricht im Fall der Zn_{1/3}NiMn_{5/3}O₄-Schicht bei 610°C eine Temperaturerhöhung von 2.2°C und bei 670°C von 9.6°C, in Fall der FeNiMnO₄-Schicht bei 610°C von 0.4°C und bei 670°C von 2.4°C. Diese nach Gleichung (1) berechneten Werte konnten durch unabhängige Messungen mittels eines Thermoelementes annähernd bestätigt werden.

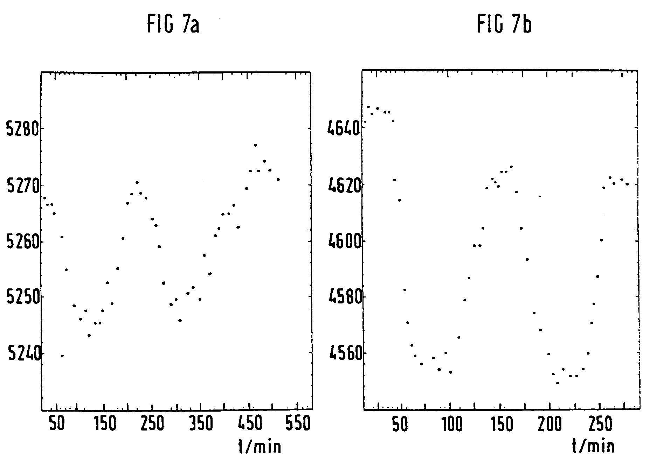

Figur 7 gibt die unter völlig analogen Bedingungen erhaltenen Meßergebnisse für eine MgNiMnO₄-Schicht bei 610°C (a) und 705°C (b) wieder.

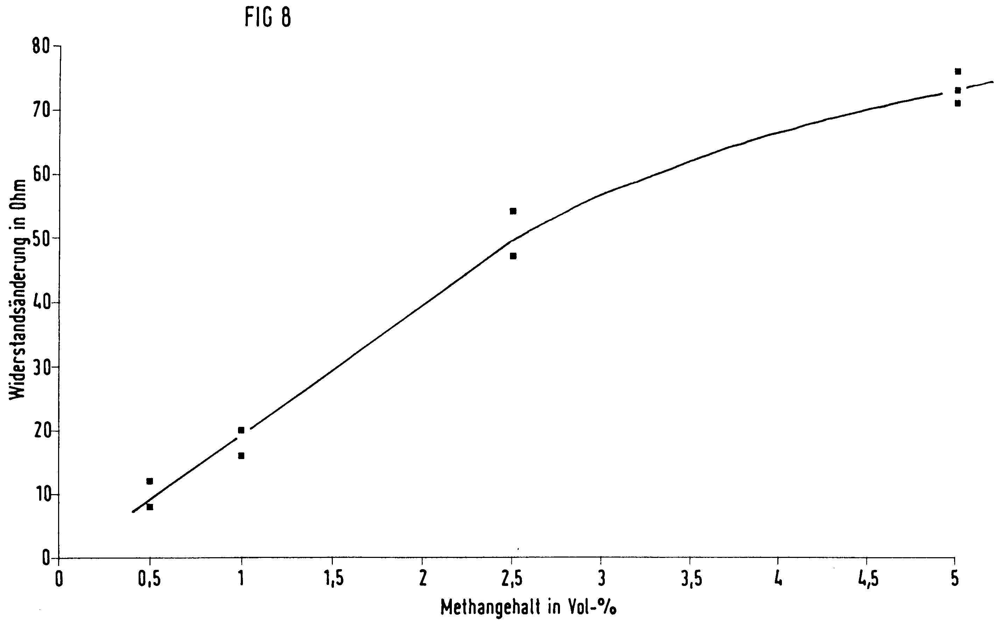

Figur 8 zeigt die Widerstandsabnahme der MgNiMnO₄-Schicht gemäß Figur 7 bei 705°C in Abhängigkeit vom Methangehalt. Die Steigung der Geraden gestattet die Abschätzung der Empfindlichkeit auf etwa 15Ω Widerstandsänderung pro Prozent CH₄-Gehalt in der Gasmischung. 0,5% CH₄ sind mit Hilfe der Gassensor-Schicht in einer Gasmischung noch nachweisbar.

**Tabelle 1**

| Elektrische Parameter der Gassensorschichten und kompakter Keramikproben gleicher Zusammensetzung | | | | |
|---|---|---|---|---|
| Substanz | _{ρ25°C}/Ω cm | B_{150/500°C}/K | _{ρ25°-C}/Ω cm | B(ϑ₁/ϑ_{2°C/K} |
| Zn_{1/3}NiMn_{5/3}O₄ | 2,47·₁₀5 | 4775 | 2,78 10³ | 3788 (25/100) |
| FeNiMnO₄ | 1,37·₁₀5 | 3786 | 5,60 10³ | 3400 25/100 |
| MgNiMnO₄ | 2,35·₁₀6 | 5265 | 2,06 10⁶ | 4550 (150/500) |
| Sr₇Mn₄O₁₅ | - | - | ₁₀8 (100°C) | 10 000 (350/1100) |

## Patentansprüche

1. Hochtemperatur-Gassensor zur Detektion der Wärmetönung brennbarer Gase in Form einer Halbleiterkeramikschicht mit Thermistoreigenschaften, **dadurch gekennzeichnet**, daß das oxidkeramische Halbleitermaterial der Schicht eine definierte kristalline Struktur und eine Thermistorkennlinie hoher Empfindlichkeit besitzt.

2. Hochtemperatur-Gassensor nach Anspruch 1, **dadurch gekennzeichnet**, daß die Halbleiterkeramikschicht zwischen elektrischen Kontakten lateral ausgebildet ist.

3. Hochtemperatur-Gassensor nach Anspruch 1, **dadurch gekennzeichnet**, daß die Halbleiterkeramikschicht zwecks Erlangung einer hohen Empfindlichkeit eine hohe Porosität aufweist.

4. Verfahren zur Herstellung eines Hochtemperatur-Gassensors nach einem der Ansprüche 1 bis 3, **dadurch gekennzeichnet**, daß die erforderliche hohe Porosität der Halbleiterkeramikschicht durch Sintern einer locker gefügten Schicht von Pulverteilchen eines Oxidhalbleiters definierter Zusammensetzung und zugleich hoher Sinteraktivität erreicht wird.

5. Verfahren nach Anspruch 4, **dadurch gekennzeichnet**, daß die locker gefügte Schicht von Pulverteilchen eines Oxidhalbleiters definierter Zusammensetzung zwecks Erlangung einer Keramikschicht hoher Porosität durch Sintern auf einem indifferenten Träger zwischhen lateral ausgebildeten elektrischen Kontakten durch Elektrophorese aus einer Suspension abgeschieden wird.

6. Verfahren nach Anspruch 4 und 5, **dadurch gekennzeichnet**, daß die elektrophoretische Abscheidung der sinteraktiven Pulverpartikel definierter Zusammensetzung zwischen den lateral ausgebildeten elektrischen Kontakten und diese zugleich partiell abdeckend auf einer indifferenten Substratkeramik durch eine aufgedampfte elektrisch leitende dünne SnO₂₋ₓ-Zwischenschicht ermöglicht wird.

7. Verfahren nach einem der Ansprüche 4 bis 6, **dadurch gekennzeichnet**, daß die SnO₂₋ₓ-Zwischenschicht nach der elektrophoretischen Abscheidung der locker gefügten sinteraktiven Pulverpartikel definierter Zusammensetzung im nachfolgenden Prozeßschritt der thermischen Fixierung der oxidkeramischen Halbleiterschicht auf dem indifferenten Träger durch Sintern ihre elektrische Leitfähigkeit verliert und dadurch die aus der Wärmetönung einer exothermen Gasreaktion resultierende Temperaturerhöhung und Widerstandsabnahme in der oxidkeramischen Halbleiterschicht als Meßsignal unverfälscht zum Tragen kommt.

8. Verfahren nach einem der Ansprüche 4 bis 7, **dadurch gekennzeichnet**, daß oxidkeramische Pulver des Systems Zn_{z}Fe_{x-z}Ni_{y}Mn_{3-x-y}O₄ elektrophoretisch auf einem indifferenten Keramikträger zwischen lateral ausgebildeten Elektroden abgeschieden und durch Sintern in eine poröse halbleitende oxidkeramische Schicht mit Sensorfunktion umgewandelt wird.

9. Verfahren nach einem der Ansprüche 4 bis 8, **dadurch gekennzeichnet**, daß oxidkeramische Pulver des Systems FeₓNi_{y}Mn_{3-x-y}O₄ elektrophoretisch auf einem indifferenten Keramikträger abgeschieden und durch Sintern in eine poröse halbleitende oxidkeramische Schicht mit Sensorfunktion umgewandelt wird.

10. Verfahren nach einem der Ansprüche 4 bis 9, **dadurch gekennzeichnet**, daß oxidkeramische Pulver der Zusammensetzung MgNiMnO₄ elektrophoretisch auf einem indifferenten Keramikträger zwischen lateral ausgebildeten Elektroden abgeschieden und durch Sintern in eine poröse halbleitende oxidkeramische Schicht mit Sensorfunktion umgewandelt wird.

11. Verfahren nach einem der Ansprüche 4 bis 10, **dadurch gekennzeichnet**, daß oxidkeramische Pulver der Verbindung Sr₇Mn₄O₁₅ elektrophoretisch auf einem indifferenten Keramikträger zwischen lateral ausgebildeten Elektroden abgeschieden und durch Sintern in eine poröse halbleitende oxidkeramische Schicht mit Sensorfunktion umgewandelt wird.
